# FASCICULE DE BREVET EUROPEEN

(11) **EP 4 551 889 B1**
(45) Date de publication et mention de la délivrance du brevet: **09.09.2026**
(21) Numéro de dépôt: 23738001.9
(22) Date de dépôt: 03.07.2023
(51) Int. Cl.: F28D 9/00, F28F 3/06, F28F 3/02, F28D 21/00, H01M 10/60, H01M 10/6554, H01M 10/6556

(54) **DISPOSITIF DE REGULATION THERMIQUE, NOTAMMENT DE REFROIDISSEMENT**
VORRICHTUNG ZUR THERMISCHEN REGELUNG, INSBESONDERE ZUR KÜHLUNG
DEVICE FOR THERMAL REGULATION, IN PARTICULAR FOR COOLING

(30) Priorité: 07.07.2022 FR 2206956
(43) Date de publication de la demande: 14.05.2025
(73) Titulaire: Valeo Electrification, 95892 Cergy Pontoise (FR)
(72) Inventeur: DE-VAULX, Cedric, 78322 Le Mesnil-Saint-Denis Cedex (FR); AZZOUZ, Kamel, 78322 Le Mesnil-Saint-Denis Cedex (FR); ETIENNE, Erwan, 78322 Le Mesnil-Saint-Denis Cedex (FR); LHERMITTE, Jean-Christophe, 78322 Le Mesnil-Saint-Denis Cedex (FR); BLANDIN, Jeremy, 78322 Le Mesnil-Saint-Denis Cedex (FR)
(74) Mandataire: Valeo Powertrain Systems
(86) Numéro de dépôt international: PCT/EP2023/068236
(87) Numéro de publication internationale: WO 2024/008646

(56) Documents cités:
- FR-A1- 3 106 199
- US-A1- 2009 258 289
- US-A1- 2015 086 831
- US-A1- 2022 120 518

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule automobile.

Le véhicule peut être de type terrestre, maritime ou aérien.

On connaît par la demande de brevet WO2018109368 un échangeur de chaleur à plaques comprenant une première et une deuxième plaques jointes de manière étanche. La première plaque est emboutie de sorte à former une pluralité de canaux séparés par des nervures et pourvus de protubérances espacées jouant le rôle de perturbateur d'écoulement. La perturbation de l'écoulement, qui génère des turbulences, permet de créer un meilleur échange de chaleur avec les cellules de batterie à refroidir. D'autres èchangeurs de chaleur à plaques sont décrits dans US-A-2015086831, FR-A-3106199 et US-A-2009258289.

L'invention vise notamment à améliorer les échanges thermiques entre les canaux de fluide et les composants à refroidir.

L'invention a ainsi pour objet un dispositif de régulation thermique, notamment de refroidissement, pour composant susceptible de dégager de la chaleur lors de son fonctionnement, notamment pour un module de stockage d'énergie électrochimique, ce dispositif comportant un réseau de circulation pour un fluide caloporteur, ce réseau comprenant :
- un canal principal d'écoulement de fluide caloporteur,
- un canal secondaire d'écoulement de fluide caloporteur,
- une zone de mélange dans laquelle débouchent le canal principal par une section transversale principale, et le canal secondaire par une section transversale secondaire, cette section transversale secondaire du canal secondaire est plus petite que cette section transversale principale du canal principal, de sorte que les écoulements de fluide provenant de ces canaux débouchent dans la zone de mélange à des vitesses différentes.

L'invention est avantageuse pour les raisons suivantes.

Le canal secondaire, du fait de sa section transversale secondaire plus faible qui débouche dans la zone de mélange, injecte du fluide dans cette zone de mélange avec un différentiel de vitesses par rapport au fluide issu du canal principal. Ce différentiel de vitesses permet de favoriser la création d'un mélange de type chaotique dans la zone de mélange.

L'invention permet ainsi d'homogénéiser la température du fluide sur toute la section transversale de l'écoulement, ce qui améliore les performances thermiques du dispositif.

Dans la présente invention, le mélange peut se faire à relativement faibles vitesses du fluide, mélange qui est de type chaotique grâce aux angles choisis pour les deux écoulements qui débouchent dans la zone de mélange. Le principe de mélange chaotique est notamment utilisé pour le mélange de fluides visqueux à faibles vitesses. De manière connue, le mélange chaotique est basé sur la "transformation du boulanger" pour le mélange des différentes couches de fluide. Par exemple, selon une manière de faire cette transformation, les couches de fluide subissent une division passive, puis une rotation dans des coudes de chiralités différentes, et enfin la recombinaison pour obtenir un étirement et un repliement pour assurer un mélange homogène.

Dans l'invention, le mélange n'est pas nécessairement turbulent si la vitesse, ou le nombre de Reynolds, ne dépasse pas un certain seuil. L'invention peut ainsi permettre un mélange à faible vitesse ou à faible nombre de Reynolds, typiquement à nombre de Reynolds Re inférieur à 2000, notamment compris entre 100 et 1 400. Ceci est particulièrement avantageux lorsque le dispositif de régulation thermique fonctionne avec des vitesses d'écoulement de fluide insuffisantes pour générer des écoulements turbulents.

Ce canal secondaire est avantageusement dépourvu d'obstacle appelés *« soft dimples »* en anglais, pour privilégier une vitesse élevée dans ce canal secondaire.

Ce canal secondaire présente de préférence une section de passage plus faible que la section de passage du canal principal.

Selon l'un des aspects de l'invention, le canal principal et le canal secondaire sont adjacents.

Selon l'un des aspects de l'invention, le canal principal et le canal secondaire sont parallèles entre eux sur au moins une partie de leur longueur, notamment sur une majeure partie de leur longueur.

Selon l'un des aspects de l'invention, le canal principal et le canal secondaire partagent une cloison latérale commune.

Selon l'un des aspects de l'invention, les flux séparés présentent une portion parallèle avant de se rejoindre dans la zone de mélange.

Selon l'un des aspects de l'invention, le canal principal et le canal secondaire sont isolés l'un de l'autre sur toute la longueur du canal secondaire, et ce canal secondaire présente une longueur suffisante pour permette au fluide qui y circule d'accélérer à une vitesse supérieure à la vitesse d'écoulement dans le canal principal.

Selon l'invention, les flux qui se divisent dans le canal principal et les canaux secondaires, et qui se regroupent dans la zone de mélange sont conservés, dans ce sens qu'ils ne reçoivent pas de flux additionnels de fluide sur ce chemin entre la séparation et la zone de mélange.

Selon l'un des aspects de l'invention, le canal secondaire présente une entrée et une sortie de fluide, la sortie débouchant dans la zone de mélange.

Selon l'un des aspects de l'invention, le canal secondaire comprend plusieurs buses de sortie de fluide successives débouchant dans plusieurs zones de mélange avec canal principal.

Selon l'un des aspects de l'invention, le canal secondaire débouche sur la zone de mélange par une buse convergente qui définit ladite section transversale secondaire.

Ainsi la buse du canal secondaire permet d'accélérer le fluide caloporteur lorsqu'il arrive dans la zone de mélange.

Selon l'un des aspects de l'invention, la buse est de forme conique.

Selon l'un des aspects de l'invention, l'angle d'injection de fluide par le canal secondaire est choisi par rapport au sens de l'écoulement dans canal principal pour favoriser la création d'un écoulement de type chaotique.

Selon l'un des aspects de l'invention, cet angle est choisi compris entre 45° et 90°, l'angle étant notamment défini par rapport à l'axe z, c'est à dire l'axe sécant de façon perpendiculaire les 2 plaques.

Selon l'un des aspects de l'invention, l'angle d'injection par rapport au sens de l'écoulement du canal principal favorise ainsi la création d'un mélange de fluide de type chaotique.

Selon l'un des aspects de l'invention, le réseau de circulation de fluide comprend deux canaux secondaires débouchant successivement sur la même zone de mélange au sein de laquelle se mélangent les flux de fluide provenant des deux canaux secondaires et du canal principal.

Selon l'un des aspects de l'invention, les deux canaux secondaires sont disposés de part et d'autre du canal principal.

Selon l'un des aspects de l'invention, les deux canaux présentent des sorties qui se font face, de part et d'autre de la zone de mélange.

En variante, le réseau de circulation comprend, sur au moins un tronçon du canal principal, un seul canal secondaire disposé sur un côté du canal principal.

Selon l'un des aspects de l'invention, le réseau de circulation présente une alternance de canaux secondaires, d'un côté seulement, sur un premier tronçon, puis de l'autre côté seulement du canal principal, sur un second tronçon, de sorte à avoir des sorties de fluide sur un côté puis de l'autre du canal principal.

Selon l'un des aspects de l'invention, le réseau de circulation comporte un tronçon dans lequel seul un canal secondaire est présent et un autre tronçon dans lequel deux canaux secondaires sont présents de part et d'autre du canal principal.

Selon l'un des aspects de l'invention, le canal secondaire est plus court que le canal principal, dans une direction de l'écoulement de fluide dans le canal principal.

Selon l'un des aspects de l'invention, l'entrée du canal secondaire communique avec le canal principal de sorte que ce canal secondaire puisse être alimenté par du fluide provenant du canal principal.

Ainsi le canal secondaire présente un piquage de fluide dans le canal principal et réinjecte le fluide ainsi prélevé, plus loin en aval, dans le canal principal, après avoir accélérer le fluide dans le canal secondaire.

Le fluide se divise ainsi entre le canal principal et le canal secondaire, puis en aval se recombine dans la zone de mélange de sorte à obtenir un mélange de type chaotique.

Selon l'un des aspects de l'invention, les flux séparés qui se recombinent dans la zone de mélange sont exactement au nombre de deux ou trois. Ces flux séparés sont issus du seul canal secondaire ou de deux canaux secondaires, et du canal principal.

Selon l'un des aspects de l'invention, l'entrée du canal secondaire présente une forme convergente de manière à accélérer le fluide circulant dans ce canal secondaire.

Selon l'un des aspects de l'invention, l'entrée du canal secondaire est configurée pour prélever du fluide dans l'une des zones de mélange du canal principal.

L'invention permet ainsi de prélever du fluide mélangé dans la zone de mélange, donc de température homogène, de l'accélérer dans le canal secondaire et le réinjecter, en aval, dans la zone de mélange suivante du canal principal. Ceci permet d'atteindre une bonne performance thermique, notamment pour une meilleure capacité de refroidissement, du fait d'une température homogène du fluide, sans couches de fluide ayant d'importants gradients de température.

Selon l'un des aspects de l'invention, le premier canal secondaire, pris dans le sens de l'écoulement dans le canal principal, est en amont de la première zone de mélange parmi la succession de zones de mélange en aval.

Selon l'un des aspects de l'invention, l'un au moins des canaux secondaires comprend, successivement dans le sens de l'écoulement du fluide dans ce canal secondaire, une seule entrée de fluide et une seule sortie de fluide vers une zone de mélange dans le canal principal.

Ainsi le fluide entrant dans ce canal secondaire ressort dans le canal principal par l'unique sortie de fluide, en aval.

En variante, l'un au moins des canaux secondaires comprend, successivement dans le sens de l'écoulement du fluide dans ce canal secondaire, une entrée de fluide et au moins deux sorties de fluide chacune vers une zone de mélange dans le canal principal.

Ainsi ce canal secondaire distribue le fluide en plusieurs points du canal principal. Le nombre global de zones de mélange peut être supérieur au nombre d'entrée de fluide, par exemple en étant le double ou le triple.

Selon l'un des aspects de l'invention, le canal principal comprend au moins un obstacle séparateur agencé pour séparer l'écoulement de fluide dans le canal principal en deux flux.

Selon l'un des aspects de l'invention, l'obstacle séparateur s'étend sur toute la hauteur du canal.

Selon l'un des aspects de l'invention, dans le cas de plaques assemblées, l'obstacle séparateur joint deux plaques inférieure et supérieure.

En variante, l'obstacle séparateur s'étend sur une partie seulement de la hauteur du canal.

Selon l'un des aspects de l'invention, le canal principal comprend une pluralité d'obstacles séparateur agencés pour séparer l'écoulement de fluide dans le canal principal en deux flux, certains obstacles s'étendant sur toute la hauteur du canal et certains autres obstacles s'étendant sur une partie seulement de la hauteur du canal.

Selon l'un des aspects de l'invention, l'obstacle séparateur est placé dans le canal principal en amont de la zone de mélange.

Selon l'un des aspects de l'invention, l'obstacle séparateur est de forme en chevron avec la pointe en amont, dans le sens d'écoulement du fluide, pour séparer l'écoulement en deux flux.

Selon l'un des aspects de l'invention, l'obstacle séparateur présente deux branches disposées en V, dont l'une au moins est orientée vers l'une des sorties du canal secondaire.

Selon l'un des aspects de l'invention, lorsque deux sorties de canaux secondaires se font face, les branches du chevron séparateur sont orientées respectivement vers les deux sorties.

Lorsqu'un canal secondaire est prévu sur un seul côté du canal principal, ce canal principal peut comporter au moins un obstacle de redirection configuré pour rédiger du fluide vers la zone de mélange, cet obstacle de redirection étant en regard de la sortie du canal secondaire qui injecte du fluide dans cette zone de mélange.

Ainsi cette zone de mélange est configurée pour mélanger du fluide provenant de la sortie du canal secondaire et du fluide rédigé par cet obstacle de redirection. En d'autres termes, dans cet exemple, au lieu d'avoir deux sorties de canaux secondaires qui se font face, il est prévu une seule sortie de canal secondaire et un obstacle de redirection pour, ensemble, recombiner le fluide dans un mélange, notamment de type chaotique.

L'obstacle de redirection présente une forme en barreau.

Selon l'un des aspects de l'invention, l'obstacle de redirection s'étend parallèlement à l'une des branches en chevron de l'obstacle séparateur.

Selon l'un des aspects de l'invention, l'obstacle de redirection s'étend sur toute la hauteur du canal, ou en variante, sur une partie seulement de la hauteur du canal.

Selon l'un des aspects de l'invention, le canal principal comporte un ou plusieurs obstacles additionnels pour perturber le fluide, notamment pour générer des turbulences, en vue d'améliorer les échanges de chaleur avec le ou les composants.

Selon l'un des aspects de l'invention, ces obstacles additionnels, notamment de forme en chevron, sont situés en dehors des zones de mélange, notamment étant situés entre l'une des zones de mélange et l'un des l'obstacles séparateurs.

Selon l'un des aspects de l'invention, ces obstacles additionnels sont de dimensions réduites par rapport aux obstacles séparateurs.

Ces obstacles additionnels sont configurés pour amorcer la turbulence, et s'assurer que le fluide soit bien dirigé vers le milieu de l'obstacle séparateur pour y être divisé.

Selon l'un des aspects de l'invention, les obstacles additionnels présentent une forme en chevron qui est inversée par rapport à la forme en chevron de l'obstacle séparateur.

Selon l'un des aspects de l'invention, le ou les canaux secondaires sont dépourvus d'obstacles internes.

Selon l'un des aspects de l'invention, le dispositif comprend deux plaques assemblées.

Selon l'un des aspects de l'invention, l'une au moins des plaques présente des portions embouties.

Selon l'un des aspects de l'invention, l'une des plaques est une plaque inférieure pourvue d'une portion emboutie pour former au moins une cloison de séparation du canal principal et du canal secondaire.

Selon l'un des aspects de l'invention, l'une des plaques est une plaque supérieure pourvue d'une portion emboutie pour former au moins un obstacle de séparation dans le canal principal.

L'invention a encore pour objet un ensemble comportant au moins un composant à refroidir et un dispositif de régulation thermique tel que décrit plus haut, le composant étant posé sur le dispositif de régulation thermique pour son refroidissement.

Selon l'un des aspects de l'invention, l'ensemble comporte un boîtier agencé pour recevoir les composants à refroidir.

Selon l'un des aspects de l'invention, le fluide caloporteur circulant dans les canaux est choisi parmi un fluide réfrigérant et eau glycolée.

D'autres caractéristiques et avantages de l'invention apparaitront plus clairement à la lecture de la description suivante, donnée à titre d'exemple illustratif et non limitatif, et des dessins annexés parmi lesquels :
- la [Figure 1] illustre, schématiquement et partiellement, un dispositif de régulation thermique ;
- la [Figure 2] illustre, schématiquement et partiellement, en coupe, un dispositif de régulation thermique ;
- la [Figure 3] illustre, schématiquement et partiellement, un dispositif de régulation thermique selon un exemple de mise en œuvre de l'invention ;
- la [Figure 4] illustre, schématiquement et partiellement, un dispositif de régulation thermique selon un autre exemple de mise en œuvre de l'invention.

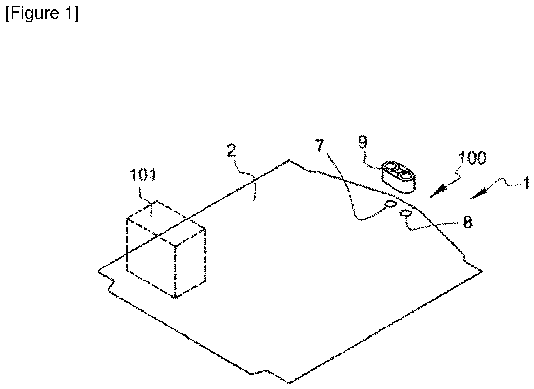

On a représenté sur la figure 1 un ensemble 100 comportant des cellules de batterie 101 à refroidir, ici disposées suivant une pluralité de rangées parallèles, et un dispositif de régulation thermique 1 agencé pour refroidir les cellules 101, qui sont en contact thermique avec une première plaque 2, ou plaque supérieure 2, du dispositif de refroidissement 1, comme expliqué plus bas. Cette première plaque 2 est plane et les composants 101 à refroidir, ici des cellules de batterie, sont posés sur le côté extérieur de cette première plaque 2.

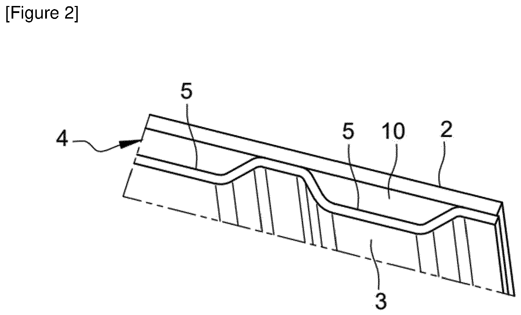

Le dispositif de régulation thermique 1 comporte la plaque supérieure 2 et une plaque inférieure 3 assemblée avec la plaque supérieure 2 pour former ensemble un réseau de circulation 4 avec une pluralité de canaux principaux 5 de circulation pour un fluide caloporteur liquide, notamment une eau glycolée, comme visible sur la figure 2. Sur cette figure 2, ne sont visibles que des canaux principaux 5.

Les canaux 5 sont alimentés en fluide, via une région de distribution de fluide, non représentée, qui communique avec une entrée de fluide 7 représentée sur la figure 1. Est également prévue une sortie de fluide 8. Une bride 9 peut être connectée à cette entrée 7 et cette sortie 8 pour assurer des raccordements avec un circuit externe de fluide, qui comprend, entre autres, une pompe.

Chaque canal 5 présente une face de refroidissement 10 qui est en regard du composant 101 à refroidir.

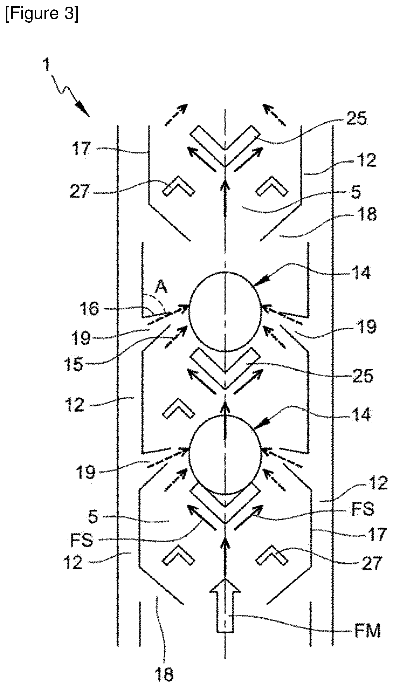

Comme on peut le voir sur la figure 3, à titre d'exemple non limitatif, le réseau 4 comprend, pour chaque canal principal 5, deux canaux secondaires 12 et des zones de mélange 14 dans lesquelles débouchent le canal principal 5 par une section transversale principale 15 , et chaque canal secondaire 12 par une section transversale secondaire 16, cette section transversale secondaire 16 du canal secondaire 12 est plus petite que cette section transversale principale 15 du canal principal 5, de sorte que les écoulements de fluide provenant de ces canaux 5 et 12 débouchent dans chaque zone de mélange 14 à des vitesses différentes.

La zone de mélange 14 reçoit du fluide provenant du canal principal 5 et des deux canaux secondaires 12.

Chaque canal secondaire 12, du fait de sa section transversale secondaire 16 plus faible qui débouche dans la zone de mélange 14, injecte du fluide dans cette zone de mélange 14 avec un différentiel de vitesses par rapport au fluide issu du canal principal 5. Ce différentiel de vitesses permet de favoriser la création d'un mélange de type chaotique dans la zone de mélange 14.

Chaque canal secondaire 12 présente, sur une majeure partie de sa longueur dans le sens de l'écoulement, une section de passage plus faible que la section de passage du canal principal 5.

Le canal principal 5 est adjacent aux deux canaux secondaires 12 qui sont de part et d'autre de ce canal principal 5.

Ainsi, le canal principal 5 et les canaux secondaires 12 sont parallèles entre eux sur une majeure partie de leur longueur, mesurée dans le sens d'écoulement général FM du fluide.

Le canal principal 5 et chacun des canaux secondaires 12 partagent une cloison latérale commune 17 de sorte que le canal principal 5 et les canaux secondaires 12 sont isolés les des autres sur toute la longueur des canaux secondaires 12. Les cloisons 17 s'étendent d'une plaque 2 à l'autre plaque 3. Les cloisons 17 peuvent être embouties ou rapportées sur l'une des plaques 2, 3.

Chaque canal secondaire 12 présente successivement une entrée 18 et deux sorties 19 de fluide, chaque sortie 19 se présentant sous la forme d'une buse de sortie débouchant dans l'une des zones de mélange 14.

Les deux canaux secondaires 12 en regard présentent des sorties 19 qui se font face, de part et d'autre de la zone de mélange 14 correspondante.

Chaque buse de sortie 19 présente une forme conique convergente qui définit ladite section transversale secondaire 16.

Ainsi la buse 19 du canal secondaire 12 permet d'accélérer le fluide caloporteur lorsqu'il arrive dans la zone de mélange 14.

L'angle d'injection A de fluide par le canal secondaire 12 est choisi par rapport au sens général de l'écoulement FM dans canal principal 5 pour favoriser la création d'un écoulement de type chaotique.

Cet angle A est choisi compris entre 45° et 90°.

Il convient de noter que les canaux secondaires 12 sont plus courts que le canal principal 5, dans une direction de l'écoulement de fluide FM.

L'entrée 18 de chaque canal secondaire 12 communique avec le canal principal 5 de sorte que ce canal secondaire 12 puisse être alimenté par du fluide provenant du canal principal 5.

Ainsi chaque canal secondaire 12 présente un piquage de fluide dans le canal principal 5 et réinjecte le fluide ainsi prélevé, plus loin en aval, dans le canal principal 5, après avoir accélérer le fluide dans le canal secondaire 12.

Le fluide se divise ainsi entre le canal principal 5 et le canal secondaire 12, puis en aval se recombine dans la zone de mélange 14. Ceci permet de faire un mélange de type chaotique.

L'entrée 18 de chaque canal secondaire 12 présente une forme convergente de manière à accélérer le fluide circulant dans ce canal secondaire 12.

L'entrée 18 du canal secondaire 12 est configurée pour prélever du fluide dans l'une des zones de mélange 14 du canal principal 5.

L'invention permet ainsi de prélever du fluide mélangé dans la zone de mélange 14, donc de température homogène, de l'accélérer dans le canal secondaire 12 et le réinjecter, en aval, dans la zone de mélange 14 suivante du canal principal 5.

Le premier canal secondaire 12, pris dans le sens de l'écoulement FM dans le canal principal, est en amont de la première zone de mélange 14 parmi la succession de zones de mélange 14 en aval.

Dans une variante non représentée, l'un au moins des canaux secondaires 12 comprend, successivement dans le sens de l'écoulement du fluide dans ce canal secondaire, une seule entrée de fluide 18 et une seule sortie de fluide 19 vers une zone de mélange 14 dans le canal principal 5. Ainsi le fluide entrant dans ce canal secondaire 12 ressort dans le canal principal 5 par l'unique sortie de fluide 19, en aval.

Dans l'exemple décrit, le canal principal 5 comprend, au niveau de chaque section transversale 15, un obstacle séparateur 25 agencé pour séparer l'écoulement de fluide dans le canal principal 5 en deux flux FS.

Chaque obstacle séparateur 25 s'étend sur une partie seulement de la hauteur du canal 5. La hauteur est mesurée perpendiculairement à un plan qui contient le canal principal 5 et les canaux secondaires 12.

Chaque obstacle séparateur 25 est placé dans le canal principal 5 en amont de la zone de mélange 14.

Les obstacles séparateurs 25 sont de forme en chevron avec la pointe en amont, dans le sens d'écoulement du fluide, pour séparer l'écoulement en deux flux FS. Les obstacles séparateurs 25 sont placés au centre du canal 5.

Ainsi, chaque obstacle séparateur 25 présente deux branches disposées en V orientées respectivement les deux sorties 19 qui se font face.

Le canal principal 5 comporte plusieurs obstacles additionnels 27 pour perturber le fluide, notamment pour générer des turbulences, en vue d'améliorer les échanges de chaleur avec les composants 101 à refroidir.

Ces obstacles additionnels 27, de forme en chevron, sont situés en dehors des zones de mélange 14, étant situés chacun entre l'une des zones de mélange 14 et l'un des l'obstacles séparateurs 25.

Ces obstacles additionnels 27 sont de dimensions réduites par rapport aux obstacles séparateurs 25.

Ces obstacles additionnels 27 sont configurés pour amorcer la turbulence, et s'assurer que le fluide soit bien dirigé vers le milieu de l'obstacle séparateur 25 pour y être divisé.

Dans l'exemple décrit, les obstacles additionnels 27 sont disposés par paire en regard de chaque obstacle séparateur 25.

Les obstacles additionnels 27 présentent une forme en chevron qui est inversée par rapport à la forme en chevron de l'obstacle séparateur 25.

Les canaux secondaires 12 sont dépourvus d'obstacles internes.

L'une au moins des plaques, à savoir la plaque inférieure 3, présente des portions embouties pour former les obstacles 25 et 27, et définir une pluralité de canaux principaux 5.

La plaque inférieure 3 est pourvue d'une portion emboutie pour former les cloisons latérales de séparation 17 du canal principal 5 et des canaux secondaires 12.

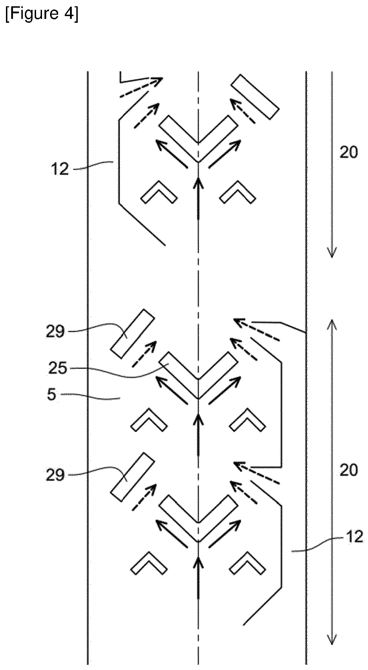

En variante, comme illustré sur la figure 4, le réseau de circulation 4 comprend, sur chaque tronçon 20 du canal principal 5, un seul canal secondaire 12 disposé sur un côté du canal principal 5.

Ainsi, le réseau de circulation 4 présente une alternance de canaux secondaires 12, d'un côté seulement, sur un premier tronçon 20, puis de l'autre côté seulement du canal principal, sur un second tronçon 20, de sorte à avoir des sorties de fluide 19 sur un côté puis de l'autre du canal principal 5.

Le canal principal 5 comporte une succession obstacles de redirection 29 configurés pour rédiger du fluide vers la zone de mélange 14 associée, cet obstacle de redirection 29 étant en regard de la sortie 19 du canal secondaire qui injecte, depuis un côté du canal 5, du fluide dans cette zone de mélange 14.

Ainsi cette zone de mélange 14 est configurée pour mélanger du fluide provenant de la sortie 19 du canal secondaire 12 et du fluide rédigé par cet obstacle de redirection 29. En d'autres termes, dans cet exemple, au lieu d'avoir deux sorties 19 de canaux secondaires qui se font face, il est prévu une seule sortie 19 de canal secondaire et un obstacle de redirection 29 pour, ensemble, recombiner le fluide dans un mélange, notamment de type chaotique.

L'obstacle de redirection 29 présente une forme en barreau.

L'obstacle de redirection 29 s'étend parallèlement à l'une des branches en chevron de l'obstacle séparateur 25.

L'obstacle de redirection 29 s'étend sur toute la hauteur du canal 5, ou en variante, sur une partie seulement de la hauteur du canal 5.

## Revendications

1. Dispositif de régulation thermique (1), notamment de refroidissement, pour composant (101) susceptible de dégager de la chaleur lors de son fonctionnement, notamment pour un module de stockage d'énergie électrochimique, ce dispositif comportant un réseau de circulation (4) pour un fluide caloporteur, ce réseau comprenant :
- un canal principal (5) d'écoulement de fluide caloporteur,
- un canal secondaire (12) d'écoulement de fluide caloporteur,
- une zone de mélange (14) dans laquelle débouchent le canal principal (5) par une section transversale principale (15), et le canal secondaire (12) par une section transversale secondaire (16), cette section transversale secondaire (16) du canal secondaire est plus petite que cette section transversale principale (15) du canal principal, de sorte que les écoulements de fluide provenant de ces canaux débouchent dans la zone de mélange (14) à des vitesses différentes.

2. Dispositif selon la revendication précédente, dans lequel le canal principal (5) et le canal secondaire (12) sont adjacents.

3. Dispositif selon la revendication précédente, dans lequel le canal principal (5) et le canal secondaire (12) partagent une cloison latérale commune (17).

4. Dispositif selon l'une des revendications précédentes, dans lequel le canal secondaire (12) comprend plusieurs buses de sortie (19) de fluide successives débouchant dans plusieurs zones de mélange (14), chaque buse étant notamment convergente.

5. Dispositif selon l'une des revendications précédentes, dans lequel l'angle d'injection de fluide par le canal secondaire (12) est choisi par rapport au sens de l'écoulement (FM) dans canal principal (5) pour favoriser la création d'un écoulement de type chaotique, cet angle (A) étant notamment choisi compris entre 45° et 90°.

6. Dispositif selon l'une des revendications précédentes, dans lequel le réseau de circulation de fluide (4) comprend deux canaux secondaires (12) débouchant successivement sur la même zone de mélange (14) au sein de laquelle se mélangent les flux de fluide provenant des deux canaux secondaires (12) et du canal principal (5).

7. Dispositif selon l'une des revendications 1 à 5, dans lequel le réseau de circulation (4) comprend, sur au moins un tronçon (20) du canal principal (5), un seul canal secondaire (12) disposé sur un côté du canal principal (5).

8. Dispositif selon la revendication précédente, dans lequel le réseau de circulation (4) présente une alternance de canaux secondaires (12), d'un côté seulement, sur un premier tronçon (20), puis de l'autre côté seulement du canal principal, sur un second tronçon (20), de sorte à avoir des sorties de fluide (19) sur un côté puis de l'autre du canal principal.

9. Dispositif selon l'une des revendications précédentes, dans lequel l'entrée (18) du canal secondaire est configurée pour prélever du fluide dans l'une des zones de mélange (14) du canal principal.

10. Dispositif selon l'une des revendications précédentes, dans lequel le canal principal (5) comprend au moins un obstacle séparateur (25), notamment en forme de chevron, agencé pour séparer l'écoulement de fluide dans le canal principal (5) en deux flux (FS).

11. Dispositif selon la revendication 7 et éventuellement l'une des autres revendications, dans lequel, lorsqu'un canal secondaire (12) est prévu sur un seul côté du canal principal, ce canal principal comporte au moins un obstacle de redirection (29), notamment en forme de barreau, configuré pour rédiger du fluide vers la zone de mélange, cet obstacle de redirection étant en regard de la sortie du canal secondaire qui injecte du fluide dans cette zone de mélange.

12. Dispositif selon l'une des revendications précédentes, dans lequel le canal principal comporte un ou plusieurs obstacles additionnels (27), notamment sous forme de chevron, pour perturber le fluide, notamment pour générer des turbulences, en vue d'améliorer les échanges de chaleur avec le ou les composants.

13. Dispositif selon l'une des revendications précédentes, dans lequel le dispositif comprend deux plaques assemblées (2 ; 3).

14. Ensemble (100) comportant au moins un composant à refroidir et un dispositif de régulation thermique (1) selon l'une des revendications précédentes, le composant étant posé sur le dispositif de régulation thermique pour son refroidissement.

## Patentansprüche

1. Thermische Regulierungsvorrichtung (1), insbesondere zur Kühlung, für eine Komponente (101), die während ihres Betriebs Wärme abgeben kann, insbesondere für ein elektrochemisches Energiespeichermodul, wobei diese Vorrichtung ein Zirkulationsnetz (4) für ein Wärmeträgerfluid aufweist, wobei dieses Netz umfasst:
- einen Hauptkanal (5) für die Strömung des Wärmeträgerfluids,
- einen Sekundärkanal (12) für die Strömung des Wärmeträgerfluids,
- eine Mischzone (14), in die der Hauptkanal (5) durch einen Hauptquerschnitt (15) und der Sekundärkanal (12) durch einen Sekundärquerschnitt (16) münden, wobei dieser Sekundärquerschnitt (16) des Sekundärkanals kleiner ist als dieser Hauptquerschnitt (15) des Hauptkanals, sodass die Fluidströmungen aus diesen Kanälen mit unterschiedlichen Geschwindigkeiten in die Mischzone (14) münden.

2. Vorrichtung nach dem vorhergehenden Anspruch, bei der der Hauptkanal (5) und der Sekundärkanal (12) benachbart sind.

3. Vorrichtung nach dem vorhergehenden Anspruch, bei der der Hauptkanal (5) und der Sekundärkanal (12) eine gemeinsame Seitenwand (17) teilen.

4. Vorrichtung nach einem der vorhergehenden Ansprüche, bei der der Sekundärkanal (12) mehrere aufeinanderfolgende Fluidauslassdüsen (19) umfasst, die in mehrere Mischzonen (14) münden, wobei jede Düse insbesondere konvergent ist.

5. Vorrichtung nach einem der vorhergehenden Ansprüche, bei der der Fluidinjektionswinkel durch den Sekundärkanal (12) in Bezug auf die Strömungsrichtung (FM) im Hauptkanal (5) gewählt wird, um die Erzeugung einer chaotischen Strömung zu begünstigen, wobei dieser Winkel (A) insbesondere zwischen 45° und 90° gewählt wird.

6. Vorrichtung nach einem der vorhergehenden Ansprüche, bei der das Fluidzirkulationsnetz (4) zwei Sekundärkanäle (12) umfasst, die nacheinander in dieselbe Mischzone (14) münden, in der sich die Fluidströme aus den beiden Sekundärkanälen (12) und dem Hauptkanal (5) vermischen.

7. Vorrichtung nach einem der Ansprüche 1 bis 5, bei der das Zirkulationsnetz (4) auf mindestens einem Abschnitt (20) des Hauptkanals (5) einen einzigen Sekundärkanal (12) umfasst, der auf einer Seite des Hauptkanals (5) angeordnet ist.

8. Vorrichtung nach dem vorhergehenden Anspruch, bei der das Zirkulationsnetz (4) eine Abwechslung von Sekundärkanälen (12) aufweist, auf nur einer Seite, auf einem ersten Abschnitt (20), dann auf der anderen Seite nur des Hauptkanals, auf einem zweiten Abschnitt (20), um Fluidauslässe (19) auf einer Seite und dann auf der anderen Seite des Hauptkanals zu haben.

9. Vorrichtung nach einem der vorhergehenden Ansprüche, bei der der Einlass (18) des Sekundärkanals konfiguriert ist, um Fluid aus einer der Mischzonen (14) des Hauptkanals zu entnehmen.

10. Vorrichtung nach einem der vorhergehenden Ansprüche, bei der der Hauptkanal (5) mindestens ein Trennhindernis (25), insbesondere in Form eines Chevrons, umfasst, das angeordnet ist, um die Fluidströmung im Hauptkanal (5) in zwei Ströme (FS) zu trennen.

11. Vorrichtung nach Anspruch 7 und gegebenenfalls einem der anderen Ansprüche, bei der, wenn ein Sekundärkanal (12) nur auf einer Seite des Hauptkanals vorgesehen ist, dieser Hauptkanal mindestens ein Umlenkhindernis (29), insbesondere in Form eines Stabes, umfasst, das konfiguriert ist, um Fluid zur Mischzone umzuleiten, wobei dieses Umlenkhindernis dem Auslass 19 des Sekundärkanals gegenüberliegt, der Fluid in diese Mischzone injiziert.

12. Vorrichtung nach einem der vorhergehenden Ansprüche, bei der der Hauptkanal ein oder mehrere zusätzliche Hindernisse (27), insbesondere in Form eines Chevrons, aufweist, um das Fluid zu stören, insbesondere um Turbulenzen zu erzeugen, um den Wärmeaustausch mit der oder den Komponenten zu verbessern.

13. Vorrichtung nach einem der vorhergehenden Ansprüche, bei der die Vorrichtung zwei zusammengesetzte Platten (2; 3) umfasst.

14. Anordnung (100), die mindestens eine zu kühlende Komponente und eine thermische Regulierungsvorrichtung (1) nach einem der vorhergehenden Ansprüche umfasst, wobei die Komponente zur Kühlung auf die thermische Regulierungsvorrichtung gelegt wird.

## Claims

1. Thermal regulation device (1), particularly for cooling, for a component (101) likely to release heat during its operation, particularly for an electrochemical energy storage module, this device comprising a circulation network (4) for a heat transfer fluid, this network comprising:
- a main channel (5) for heat transfer fluid flow,
- a secondary channel (12) for heat transfer fluid flow,
- a mixing zone (14) into which the main channel (5) opens through a main cross-section (15), and the secondary channel (12) opens through a secondary cross-section (16), this secondary cross-section (16) of the secondary channel is smaller than this main cross-section (15) of the main channel, so that the fluid flows from these channels enter the mixing zone (14) at different speeds.

2. Device according to the preceding claim, in which the main channel (5) and the secondary channel (12) are adjacent.

3. Device according to the preceding claim, in which the main channel (5) and the secondary channel (12) share a common lateral partition (17).

4. Device according to one of the preceding claims, in which the secondary channel (12) comprises several successive fluid outlet nozzles (19) opening into several mixing zones (14), each nozzle being particularly convergent.

5. Device according to one of the preceding claims, in which the fluid injection angle by the secondary channel (12) is chosen in relation to the flow direction (FM) in the main channel (5) to promote the creation of a chaotic type flow, this angle (A) being particularly chosen between 45° and 90°.

6. Device according to one of the preceding claims, in which the fluid circulation network (4) comprises two secondary channels (12) successively opening into the same mixing zone (14) within which the fluid flows from the two secondary channels (12) and the main channel (5) mix.

7. Device according to one of claims 1 to 5, in which the circulation network (4) comprises, on at least one section (20) of the main channel (5), only one secondary channel (12) arranged on one side of the main channel (5).

8. Device according to the preceding claim, in which the circulation network (4) presents an alternation of secondary channels (12), on one side only, on a first section (20), then on the other side only of the main channel, on a second section (20), so as to have fluid outlets (19) on one side and then on the other side of the main channel.

9. Device according to one of the preceding claims, in which the inlet (18) of the secondary channel is configured to draw fluid from one of the mixing zones (14) of the main channel.

10. Device according to one of the preceding claims, in which the main channel (5) comprises at least one separator obstacle (25), particularly chevron-shaped, arranged to separate the fluid flow in the main channel (5) into two flows (FS).

11. Device according to claim 7 and possibly one of the other claims, in which, when a secondary channel (12) is provided on only one side of the main channel, this main channel includes at least one redirection obstacle (29), particularly in the form of a bar, configured to redirect fluid toward the mixing zone, this redirection obstacle being opposite to the outlet 19 of the secondary channel that injects fluid into this mixing zone.

12. Device according to one of the preceding claims, in which the main channel includes one or more additional obstacles (27), particularly in the form of chevrons, to disturb the fluid, particularly to generate turbulence, in order to improve heat exchange with the component(s).

13. Device according to one of the preceding claims, in which the device comprises two assembled plates (2; 3).

14. Assembly (100) comprising at least one component to be cooled and a thermal regulation device (1) according to one of the preceding claims, the component being placed on the thermal regulation device for its cooling.
